# EUROPÄISCHE PATENTANMELDUNG

(11) **EP 1 741 481 A2**
(43) Veröffentlichungstag der Anmeldung: **10.01.2007**
(21) Anmeldenummer: 06011582.1
(22) Anmeldetag: 03.06.2006
(51) Int. Cl.: B01D 69/12, B01D 67/00

(54) **Kompositmembran**

(30) Priorität: 05.07.2005 DE 102005031703
(71) Anmelder: GKSS-Forschungszentrum Geesthacht GmbH, 21502 Geesthacht (DE)
(72) Erfinder: Ebert, Katrin, 21339 Lüneburg (DE); Koll, Joachim, 21493 Schwarzenbek (DE); Wind, Jan, 21481 Lauenburg (DE)
(74) Vertreter: Seemann, Ralph

(57) **Zusammenfassung**

Die Erfindung betrifft eine Kompositmembran (5) mit einer trennaktiven Membranschicht und einer Trägermembran, ein Verfahren zur Herstellung derselben sowie eine Verwendung derselben.

Die erfindungsgemäße Kompositmembran zeichnet sich dadurch aus, dass die trennaktive Membranschicht ein durch elektromagnetische Strahlung mit einer Wellenlänge, die kleiner als 800 nm ist, und/oder ein durch Elektronenstrahlen ausgehärtetes Polymer umfasst.

Das erfindungsgemäße Verfahren zeichnet sich dadurch aus, dass eine Schicht aus einer Lösung von einem durch elektromagnetische Strahlung mit einer Wellenlänge, die kleiner als 800 nm ist, und/oder ein durch Elektronenstrahlen aushärtbaren Polymer, und einer Initiatorsubstanz auf eine Trägermembran aufgebracht wird und anschließend durch die elektromagnetische Strahlung und/oder Elektronenstrahlen ausgehärtet wird.

Die erfindungsgemäße Verwendung dient zur Zurückhaltung von niedermolekularen Substanzen (1, 7) aus organischen Lösungen (3).

## Beschreibung

Die Erfindung betrifft eine Kompositmembran mit einer trennaktiven Membranschicht und einer Trägermembran. Die Erfindung betrifft ferner ein Verfahren zum Herstellen einer derartigen Kompositmembran sowie die Verwendung einer derartigen Kompositmembran.

Bei der Trennung bzw. Zurückhaltung von niedermolekularen Substanzen aus organischen Lösungen werden meist sehr energieintensive Aufarbeitungsschritte, beispielsweise zum Destillieren, Filtrieren, Entschleimen, Entsäuern, Desodorieren, Bleichen usw. verwendet. Beispielsweise wird bei der Speiseölherstellung ein Teil des Speiseöls mittels Hexan-Extraktion aus der Ölsaat gewonnen. Bei der Extraktion mittels dieses organischen Lösemittels (n-Hexan) werden ca. 99% des in der Saat enthaltenen Öls aber auch andere Begleitstoffe herausgelöst. In einer Reihe von weiteren Verfahrensschritten müssen nach der Extraktion Lösemittel und Begleitstoffe abgetrennt werden, um reines Speiseöl zu erhalten. Üblicherweise geschieht dieses mittels eines sehr aufwendigen Verfahrens, bei dem neben Chemikalien große Mengen an Wasser erforderlich sind. Zuerst wird das Lösemittel aus einem Extraktionsgemisch, das ca. 30% ÖI enthält, bei ca. 150° C entfernt. Aus der dabei entstehenden Miscella werden durch Ausfällung mit wässrigen Lösungen von Phosphorsäure und Natronlauge beispielsweise Phosphorlipide entfernt. Nachdem das Öl anschließend gewaschen wurde, um verbleibende Chemikalienreste zu entfernen, wird es getrocknet. Durch Zugabe von aktivierter Kohle werden Farbstoffe, wie Chlorophyll und Beta-Karotin, entfernt. In der letzten Behandlungsstufe wird das Material mit Wasserdampf im Vakuum bei ca. 200° C desodoriert, um störende Geruchsstoffe zu entfernen.

Die Herstellung eines durch Lösemittelextraktion gewonnenen Speiseöls erfolgt bisher über einen konventionellen Prozess, der sehr energieintensiv ist und bei dem große Mengen an Wasser und Chemikalien eingesetzt werden müssen. Aus AT 343 244 B, die der US 4 062 882 A entspricht, ist ein Verfahren zum Raffinieren von Zusammensetzungen aus rohem Glyzeritöl bekannt, dass eine poröse Membran verwendet, um Bestandteile von unterschiedlichem Molekulargewicht zu trennen. Die in diesen Schriften angegebenen Trenngrenzen liegen zwischen 1.500 und 200.000 im Hinblick auf das Molekulargewicht. Bevorzugt ist ein Bereich von 10.000 bis 50.000 mw (mw von molecular weight). Die Membranen sind Polycylnitrilmembranen und dienen zur Abtrennung von Phospholipiden, die in der zu trennenden Lösung zu relativ großen Micellen aggregieren.

In der DE 31 51 966 C2, die der US 4 414 157 A entspricht, wird die Verwendung von porösen Polyimide-Hohlfadenmembranen für die Abtrennung von Phospholipiden aus n-Hexan beschrieben. Die verwendeten Membranen haben eine Trenngrenze zwischen 10.000 bis 100.000 mw.

Im Journal of Membrane Science, 282 (2004), Seiten 103 bis 116, wird eine Kompositmembran zur Abtrennung von Öl/n-Hexan-Gemischen beschrieben. Die Kompositmembran besteht aus einer Polyacrylnitril-Trägermembran und einer trennaktiven Schicht aus Polydimethylsiloxan (PDMS). Dazu wird ein hochmolekulares Pre-Polymer mit Vinylgruppen verwendet. Die Vernetzung erfolgt durch Hydrosylilierung mit Hilfe eines Platinkatalysators und eines Vernetzers, der aus kurzkettigem PDMS mit Hydridgruppen besteht. Die Stabilität dieser Membran in Speiseöl/n-Hexan-Gemischen ist allerdings relativ kurz.

Im Stand der Technik ist bisher keine Membran angegeben, die ein hohes Trennvermögen für niedermolekulare Stoffe bei einer Trenngrenze von unter 2.000 (vorzugsweise zwischen 200 bis 1.500) in Öl/n-Hexan-Gemischen bei gleichzeitiger Langzeitstabilität der Membran aufweisen. Außerdem sind die Aufarbeitungsverfahren von Speiseöl/n-Hexan-Gemischen sehr Energie ineffizient und müssen außerdem bei höheren Temperaturen durchgeführt werden, so dass die Qualität des Öls vermindert werden kann. Außerdem erfordern konventionelle Verfahren den Einsatz von Chemikalien, wie beispielsweise Natronlauge, die im Anschluss aufwendig wieder aus dem Öl entfernt werden müssen. Daher ist der Verbrauch an Wasser und Energie für diese konventionellen Verfahren relativ hoch.

Es ist Aufgabe der vorliegenden Erfindung, eine Kompositmembran herzustellen, die bei einer relativ niedrigen Trenngrenze eine hohe Langzeitstabilität in organischen Lösungen bzw. von mit organischen Lösungsmitteln kontaminierten wässrigen Lösungen hat. Die entsprechende Kompositmembran soll hierbei schnell und einfach herstellbar sein. Außerdem soll die Kompositmembran ein möglichst hohes Rückhaltevermögen für niedermolekulare Stoffe aufweisen.

Gelöst wird diese Aufgabe durch eine Kompositmembran mit einer trennaktiven Membranschicht und einer Trägermembran, wobei die trennaktive Membranschicht ein durch elektromagnetische Strahlung mit einer Wellenlänge, die kleiner als 800 nm ist, und/oder ein durch Elektronenstrahlen ausgehärtetes Polymer umfasst.

Durch die Verwendung eines durch elektromagnetische Strahlung mit einer Wellenlänge, die kleiner als 800 nm ist, und/oder ein durch Elektronenstrahlen ausgehärtetes Polymer ist eine sehr gute Lösemittelstabilität der trennaktiven Membranschicht gegeben. Hierbei hängt die Stabilität der trennaktiven Membranschicht für verschiedene Lösemittel von dem jeweiligen Material ab. Es ergibt sich insbesondere eine sehr schnelle und einfache Herstellbarkeit, da die Aushärtung von Polymeren mittels hoher energetischer Strahlung bzw. Elektronenstrahlung sehr schnell vonstatten geht und somit langwierige Prozesse vermieden werden können. Vorzugsweise handelt es sich bei der trennaktiven Membranschicht um eine Nanofiltrationsmembran, wobei diese insbesondere erst durch Quellung in der Lösung minimal kleine Poren bildet. Im trockenen Zustand ist die erfindungsgemäße Nanofiltrationsmembranschicht bzw. die trennaktive Membranschicht gasdicht. Die Trenngrenze, die das Molekulargewicht angibt, das zu 90% zurückgehalten wird, ist bevorzugter Weise in einem Bereich kleiner als 1.500 mw und vorzugsweise im Bereich zwischen 200 und 1.000 mw.

Vorzugsweise ist die Wellenlänge kleiner als 400 nm. Hierbei handelt es sich dann vorzugsweise um höher energetische Strahlung, die zumindest im Ultravioletten liegt. Vorzugsweise geht die Wellenlänge hinunter bis zu 1 nm.

Eine besonders bevorzugte Ausführungsform liegt dann vor, wenn die trennaktive Schicht ein Silikonacrylat umfasst. Vorzugsweise besteht die trennaktive Schicht aus einem Silikonacrylat. Bei dem Silikonacrylat handelt es sich vorzugsweise um die folgende Zusammensetzung: 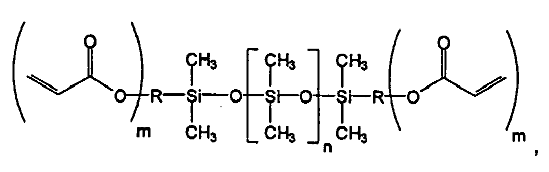 wobei m und n natürliche Zahlen sind und R einen Rest darstellt.

Dieses Silikonacrylat, das beispielsweise mit der Handelsbezeichnung Tego RC 902 von der Firma Degussa AG (Goldschmidt Industrial Specialties), Deutschland, erworben werden kann, ist besonders gut für die Speiseölaufbereitung mit n-Hexan geeignet, da eine hohe Langzeitstabilität in Speiseöl/n-Hexan-Gemischen gegeben ist und ferner sehr gute Trenneigenschaften. Grundsätzlich eignen sich für diese Anwendung die Silikonacrylate der Tego RC 900-Serie. Die Gruppe der Silikonacrylate der Tego RC 720-Serie kann sich insbesondere zur Erdöl-Raffination eignen. Die chemische Formel hierzu ist die folgende:

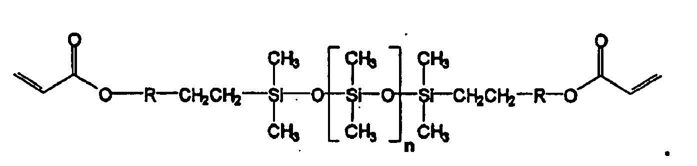

Auch die folgende chemische Formel von mit UV-Strahlen aushärtbaren Silikonacrylaten eignet sich für bestimmte Anwendungen, beispielsweise zur Aufreinigung pharmazeutischer Substanzen:

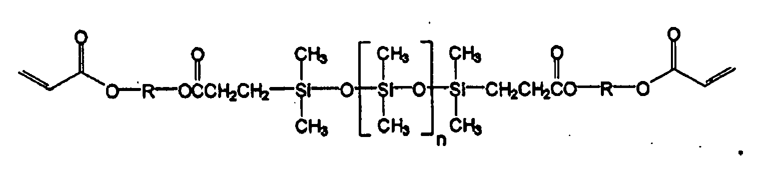

Vorzugsweise umfasst die Trägermembran Polyacrylnitril (PAN) und/oder Polyvinylidenfluorid (PVDF). Wenn die Trägermembran vorzugsweise ein anorganisches poröses Material umfasst, wie beispielsweise TiO₂, ZrO₂ und/oder Al₂O₃, können die erfindungsgemäßen Membranen auch für die Aufarbeitung von Lösungen verwendet werden, die dipolar-aprotische Lösemittel, wie z. B. Dimethylformamid (DMF), enthalten.

Vorzugsweise ist die erfindungsgemäße Kompositmembran hydrophob.

Die Trägermembran umfasst vorzugsweise auch eine organische Schicht auf einer anorganischen Trägerschicht. In diesem Fall können besonders gleichmäßige trennaktive Schichten hergestellt werden. Bei der Trägermembran aus wenigstens zwei Schichten kann es sich dann beispielsweise um PVDF/ TiO₂ oder PAN/ TiO₂ handeln.

Ein erfindungsgemäßes Verfahren zum Herstellen einer erfindungsgemäßen Kompositmembran ist dadurch gekennzeichnet, dass eine Schicht aus einer Lösung von einem durch elektromagnetische Strahlung mit einer Wellenlänge, die kleiner als 800 nm ist, und/oder durch Elektronenstrahlen aushärtbaren Polymer und einer Initiatorsubstanz auf eine Trägermembran aufgebracht wird und anschließend durch die elektromagnetische Strahlung und/oder Elektronenstrahlen ausgehärtet wird. Bei der Initiatorsubstanz kann es sich beispielsweise um eine Initiatorlösung, wie beispielsweise Photo Compound 750, handeln, die von der Firma Goldschmidt GmbH sein.

Vorzugsweise umfasst die Lösung ein Lösemittel, das vor dem Aushärten des Polymers verdampft wird. Hierbei kann es sich beispielsweise um 2-Propanol handeln. Der Initiator ist vorzugsweise ein Photoinitiator, der durch Bestrahlung mit UV-Licht freie Radikale bildet.

Vorzugsweise hat die Trägermembran derart kleine Poren, dass die Lösung im Wesentlichen auf der Oberfläche der Trägermembran verbleibt. Die kleinen Poren sind vorzugsweise auf der Oberfläche der Trägermembran vorgesehen. Die Porenverteilung sollte möglichst eng sein und der mittlere Porenradius so klein, dass die Moleküle der Lösung, insbesondere der Silikonacrylat-Lösung, nicht in die Poren der porösen Trägerschicht eindringen können.

Erfindungsgemäß wird eine erfindungsgemäße Kompositmembran zur Zurückhaltung von niedermolekularen Substanzen aus organischen Lösungen verwendet. Vorzugsweise wird die Kompositmembran zur Aufreinigung pharmazeutischer Substanzen, zur Aufbereitung von Speiseölen, zur Abtrennung von Homogenkatalysatoren aus organischen Lösungen und/oder zur Aufarbeitung von Erdölfraktionen angewendet.

Die Erfindung wird nachstehend ohne Beschränkung des allgemeinen Erfindungsgedankens anhand von Ausführungsbeispielen unter Bezugnahme auf die Zeichnung beschrieben, wobei bezüglich im Text nicht näher erläuterter erfindungsgemäßer Einzelheiten ausdrücklich auf die Zeichnung verwiesen wird. Es zeigt:

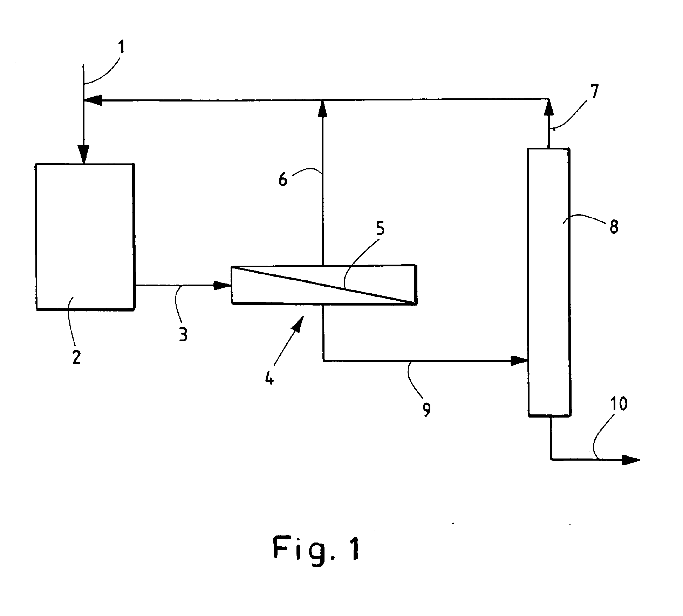

- Fig. 1: eine schematische Darstellung eines Membrantrennverfahrens.

Fig. 1 zeigt schematisch ein Membrantrennverfahren zur Aufbereitung von Speiseöl, beispielsweise Rapsöl. Das zu raffinierende Rapsöl befindet sich in einer Extraktionsvorrichtung 2, in der n-Hexan1 eingebracht wird, um eine Extraktion des Öls vorzunehmen. Die Bezugsziffer 3 deutet ein Öl/Lösemittelgemisch 3 an, das in eine Membranvorrichtung verbracht wird. In der Membranvorrichtung 4 ist eine erfindungsgemäße Kompositmembran 5 angeordnet. Diese dient zur Abtrennung niedermolekularer Substanzen, wie beispielsweise n-Hexan, und weiterer Lösemittel aus dem Öl. Mit 6 ist ein lösemittelangereicherter Strom als Permeat angezeigt, der in den Kreislauf, d. h. in die Extraktionsvorrichtung 2 zurückgeführt wird. Ein ölangereicherter Strom 9 wird in eine Destillationsvorrichtung 8 verbracht, in der n-Hexan 7 durch beispielsweise Wärmeeinwirkung heraus destilliert wird. Das n-Hexan 7 wird auch in den Prozess zurückgeführt. Aus der Destillationsvorrichtung 8 wird das gewonnene Speiseöl 10 abgeführt.

Die erfindungsgemäße Kompositmembran eignet sich für die Abtrennung niedermolekularer Stoffe aus organischen Lösungen. Insbesondere ist die Membran für die Aufarbeitung von Speiseöl/n-Hexan-Gemischen geeignet. Die Membran zeichnet sich durch sehr gute Trenneigenschaften und Langzeitstabilität in Speiseöl/n-Hexan-Gemischen aus.

Die trennaktive Schicht der erfindungsgemäßen Membran besteht in diesem Ausführungsbeispiel aus einem Silikonacrylat, das durch Bestrahlung mit UV-Licht vernetzt wurde. Durch die Vernetzung wird die besondere Lösemittelstabilität des Silikonacrylats erreicht. Das UV-vernetzbare Silikonacrylat kann ein handelsübliches Silikonacrylat, wie beispielsweise Tego RC 902 der Firma Degussa (Goldschmidt) sein. Außerdem ist eine Initiatorlösung, wie beispielsweise Photo Compound 750 der Goldschmidt GmbH verwendet worden.

Die Trägermembran kann aus bekannten membranbildenden Polymeren, wie beispielsweise Polyacrylnitril (PAN) und/oder Polyvinylidenfluorid (PVDF) bestehen. Die Trägermembran kann auch aus organisch-anorganischen Membranen, wie beispielsweise PVDF/ TiO₂ oder eine PAN/ TiO₂, aber auch andere membranbildenden Polymeren sowie aus anderen anorganischen Komponenten, wie beispielsweise ZrO₂ bestehen bzw. diese umfassen. Die Trägermembran kann auch aus anorganischen Trägern, beispielsweise TiO₂, ZrO₂ und/oder Al₂O₃, und auch aus anderen anorganischen, für die Membranherstellung geeigneten Materialien bestehen. Unabhängig vom Material müssen die Trägermembranen an der Membranoberfläche eine möglichst enge Porenverteilung und einen solchen mittleren Porenradius aufweisen, dass die Moleküle der Silikonacrylat-Lösung nicht in die Poren der porösen Trägerschicht eindringen können.

Die Beschichtungslösung umfasst eine bestimmte Konzentration an UV-vernetzbarem Silikonacrylat Tego RC 902 sowie die entsprechende Menge an erforderlichem Photoinitiator Photo Compound 750 in 2-Propanol. Diese Lösung wird mittels einer geeigneten Beschichtungsmethode, beispielsweise durch Dip-coating oder Rollcoating, auf die Trägermembran aufgetragen. Danach wird das Lösemittel verdampft, z. B. in einem Ofen bei 100° C. Die UV-Vernetzung des Silikonacrylats erfolgt durch Bestrahlung mit einem Quecksilberdampfstrahler (polychromatisches UV-Licht). Die Bestrahlungsdosis beträgt in diesem Ausführungsbeispiel 800 mJ/m². Der Restsauerstoffgehalt in der Bestrahlungszelle liegt unter 50 ppm. Die erfindungsgemäße selektive Trennschicht der Kompositmembran weist vorzugsweise eine Dicke im Bereich von 0,2 bis 10 µm, vorzugsweise eine Dicke im Bereich von 1 µm bis 5 µm auf.

Die erfindungsgemäße Membran zeichnet sich durch ein hohes Rückhaltevermögen für niedermolekulare Stoffe in Rapsöl bei gleichzeitig guter Langzeitstabilität in Rapsöl/-Hexan-Gemischen aus.

Die erfindungsgemäße Membran ist eine Kompositmembran mit einer trennaktiven Schicht, die vorzugsweise keine Poren enthält. Die Kompositmembran besitzt die intrinsischen Gastrenneigenschaften des Silikonacrylats, was durch die Messung der Sauerstoff- und Stickstoffpermeabilitäten bestätigt wurde. Somit eignet sich die Membran für die Abtrennung niedermolekularer Stoffe. Die Langzeitstabilität der Kompositmembran in Speiseöl/n-Hexan-Gemischen wurde bestätigt.

Der Einsatz der erfindungsgemäßen Membran kann bei der Herstellung von durch Lösemittelextraktion gewonnenem Speiseöl zu erheblichen Kosteneinsparungen führen. So lässt sich beispielsweise der Verbrauch an Wasser um ca. 85%, die Kosten für die Abwasserbehandlung um ca. 63% und die notwendige elektrische Energie um ca. 62% reduzieren. Zusätzlich konnten die konventionell auftretenden Raffinationsverluste um ca. 60% reduziert werden. Außerdem konnte die Qualität des Speiseöls verbessert werden, da keine bzw. nur eine geringere thermische Behandlung notwendig ist. Die Emission von n-Hexan konnte durch den Einsatz der Membrantechnologie bei der Speiseölherstellung auf wenigstens 5% des heutigen Niveaus gesenkt werden. Bei der bisherigen Produktionsweise entweichen ca. 1,7 kg n-Hexan pro Tonne verarbeiteten Saatgutes in die Atmosphäre. Allein die Produktion von Raps- und Sojaöl in den Ländern der Europäischen Union verursacht jährlich eine Emission von rund 20.000 t n-Hexan. Durch die erfindungsgemäße Membran kann diese Emission deutlich reduziert werden.

### Beispiel 1:

Beschichtungslösung: 50,05 g Tego RC 902, 7,49 g Photo Compound 750; 157,55 g 2-Propanol.

Die Beschichtungslösung wurde mittels Dip-Coating auf eine PAN-Trägermembran aufgetragen. Anschließend wurde diese Membran in einem Ofen bei 90° C getrocknet. Danach wurde die Membran mittels eines Quecksilber-Mitteldruckstrahlers mit polychromatischem UV-Licht unter Stickstoffatmosphäre (< 50 ppm O₂) vernetzt. Die Bestrahlungsdosis betrug 800 mJ/cm².

Von der so hergestellten Membran wurde ein Stamp mit einem Durchmesser von 7,5 cm ausgestanzt und in eine Ultrafiltrationszelle von Millipore eingelegt. In diese Zelle wurden 300 ml einer Lösung von 10% Rapsöl in n-Hexan gefüllt. Unter ständigem Rühren wurde das Trennverhalten der Membran bei 6 bar Absolutdruck (d. h. ein Differenzdruck von ungefähr 5 bar) bestimmt. Die n-Hexan-Permeabilität durch die Membran betrug 1,08 l/m² h bar. Das Speiseöl wurde zu 90,3% zurückgehalten.

Die in diesem Beispiel beschriebene Membran wurde für die Bestimmung der Langzeitstabilität in Lösungen von 10% Rapsöl in n-Hexan gelegt und nach 60 Tagen erneut vermessen.

| Tage in Lösung | Permeabilität (l/m²h bar) | Rückhaltung (%) |
|---|---|---|
| 1 | 1,08 | 90,3 |
| 60 | 1,00 | 90,8 |

Membranen mit Trennschicht aus UV-vernetzbarem Polymer und/oder durch Elektronenstrahlen ausgehärtetem bzw. vernetzbarem Polymer und insbesondere einem Silikonacrylat, können für die Aufarbeitung von organischen Lösungen bzw. von mit organischen Lösemitteln kontaminierten wässrigen Lösungen eingesetzt werden. Dabei können niedermolekulare Bestandteile aus den Lösungen abgetrennt werden. Bei Verwendung ausreichend chemisch stabiler Trägermembranen, die je nach Anwendungsfall entsprechend auszuwählen sind, wie beispielsweise aus den oben angegebenen Beispielen, können diese Membranen auch für die Aufarbeitung von Lösungen verwendet werden, die dipolar-aprotische Lösemittel enthalten. Die Anwendungsgebiete sind vielfältig, z. B. die Aufreinigung pharmazeutischer Substanzen, die Aufarbeitung von Speiseöl, die Abtrennung von Homogenkatalysatoren aus organischen Lösungen und die Aufarbeitung von Erdölfraktionen.

### Bezugszeichenliste

- 1: n-Hexan
- 2: Extraktionsvorrichtung
- 3: Öl/Lösemittelgemisch
- 4: Membranvorrichtung
- 5: Membran
- 6: Lösemittelangereicherter Strom
- 7: n-Hexan
- 8: Destillationsvorrichtung
- 9: Ölangereicherter Strom
- 10: Öl

## Patentansprüche

1. Kompositmembran (5) mit einer trennaktiven Membranschicht und einer Trägermembran, **dadurch gekennzeichnet, dass** die trennaktive Membranschicht ein durch elektromagnetische Strahlung mit einer Wellenlänge, die kleiner als 800 nm ist, und/oder ein durch Elektronenstrahlen ausgehärtetes Polymer umfasst.

2. Kompositmembran (5) nach Anspruch 1, **dadurch gekennzeichnet, dass** die Wellenlänge kleiner als 400 nm ist.

3. Kompositmembran (5) nach Anspruch 1 oder 2, **dadurch gekennzeichnet, dass** die trennaktive Schicht ein Siliconacrylat umfasst.

4. Kompositmembran (5) nach Anspruch 3, **dadurch gekennzeichnet, dass** das Silikonacrylat die folgende Zusammensetzung hat: 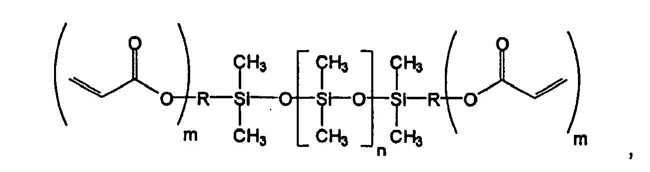 wobei m und n ganze Zahlen sind und R ein Rest.

5. Kompositmembran (5) nach einem oder mehreren der Ansprüche 1 bis 4, **dadurch gekennzeichnet, dass** die Trägermembran Polyacrylnitril (PAN) und/oder Polyvinylidenfluorid (PVDF) umfasst.

6. Kompositmembran (5) nach einem oder mehreren der Ansprüche 1 bis 5, **dadurch gekennzeichnet, dass** die Trägermembran ein anorganisches, poröses Material umfasst.

7. Verfahren zum Herstellen einer Kompositmembran (5) nach einem oder mehreren der Ansprüche 1 bis 6, **dadurch gekennzeichnet, dass** eine Schicht aus einer Lösung von einem durch elektromagnetische Strahlung mit einer Wellenlänge, die kleiner als 800 nm ist, und/oder durch Elektronenstrahlen aushärtbaren Polymer und einer Initiatorsubstanz auf eine Trägermembran aufgebracht wird und anschließend durch die elektromagnetische Strahlung und/oder Elektronenstrahlen ausgehärtet wird.

8. Verfahren nach Anspruch 7, **dadurch gekennzeichnet, dass** die Lösung ein Lösemittel umfasst, das vor dem Aushärten des Polymers verdampft wird.

9. Verfahren nach Anspruch 7 oder 8, **dadurch gekennzeichnet, dass** die Trägermembran derart kleine Poren hat, dass die Lösung im Wesentlichen auf der Oberfläche der Trägermembran verbleibt.

10. Verwendung einer Kompositmembran (5) nach einem oder mehreren der Ansprüche 1 bis 6 zur Zurückhaltung von niedermolekularen Substanzen (1, 7) aus organischen Lösungen (3).

11. Verwendung nach Anspruch 10, **dadurch gekennzeichnet, dass** die Kompositmembran (5) zur Aufreinigung pharmazeutischer Substanzen, zur Aufbereitung von Speiseölen (10), zur Abtrennung von Homogenkatalysatoren aus organischen Lösungen und/oder zur Aufarbeitung von Erdölfraktionen angewendet wird.
